Europäisches Patentamt

(19) European Patent Office

Office européen des brevets

(11) Numéro de publication: **0 085 015**
**B1**

(12) **FASCICULE DE BREVET EUROPEEN**

(45) Date de publication du fascicule du brevet:
10.04.85

(21) Numéro de dépôt: 83400191.9

(22) Date de dépôt: 27.01.83

(51) Int. Cl.⁴: **B 60 T 11/26**

(54) **Réservoir de liquide de freinage.**

(30) Priorité: 27.01.82 FR 8201240

(43) Date de publication de la demande:
03.08.83 Bulletin 83/31

(45) Mention de la délivrance du brevet:
10.04.85 Bulletin 85/15

(84) Etats contractants désignés:
**BE DE GB**

(56) Documents cités:
**DE - A - 1 655 470**
**DE - A - 2 164 089**
**DE - A - 2 339 279**
**DE - B - 1 134 303**
**US - A - 2 675 093**

(73) Titulaire: **SOCIETE ANONYME D.B.A., Centre Paris
Pleyel, F-93521 St-Denis Cédex 01 (FR)**

(72) Inventeur: **Papiau, Guy, 2, Avenue François Millet,
F-95400 Arnouville-lès-Gonesse (FR)**

(74) Mandataire: **Poidatz, Emmanuel et al, Service Brevets
Bendix 44 rue François 1er, F-75008 Paris (FR)**

# Description

L'invention concerne un réservoir pour liquide de freinage selon le préambule de la revendication 1.

Dans de nombreux réservoirs, la communication entre l'atmosphère et le volume intérieur est assurée *via* des passages définis dans le bouchon qui renferme l'ouverture de remplissage.

On connaît, de la demande de brevet allemand DE-A N° 2339279, un bouchon dans lequel le passage se termine par une ouverture orientée vers le bas à la périphérie inférieure du bouchon. Cependant, lorsque l'ensemble est directement exposé aux projections d'eau (circulation sur route mouillée, lavage du véhicule à grande eau), des gouttes d'eau restent accrochées au bord inférieur du bouchon et parviennent à former un film d'eau dans l'ouverture. Lors du freinage, la baisse du niveau de liquide dans le réservoir provoque une aspiration d'air et un entraînement de gouttelettes d'eau vers l'intérieur du réservoir. De plus, en cas de gel, il se forme un bouchon de glace qui obture l'ouverture.

Pour pallier ces inconvénients, on prévoit selon l'invention telle que caractérisée dans la revendication 1, de former la périphérie inférieure du bouchon par une suite de lignes inclinées par rapport à l'horizontale se terminant en une série d'arêtes pointées vers le bas. De la sorte, les gouttes d'eau s'écoulent le long de ces lignes inclinées pour se rassembler au niveau des arêtes et se détacher du bouchon par gravité.

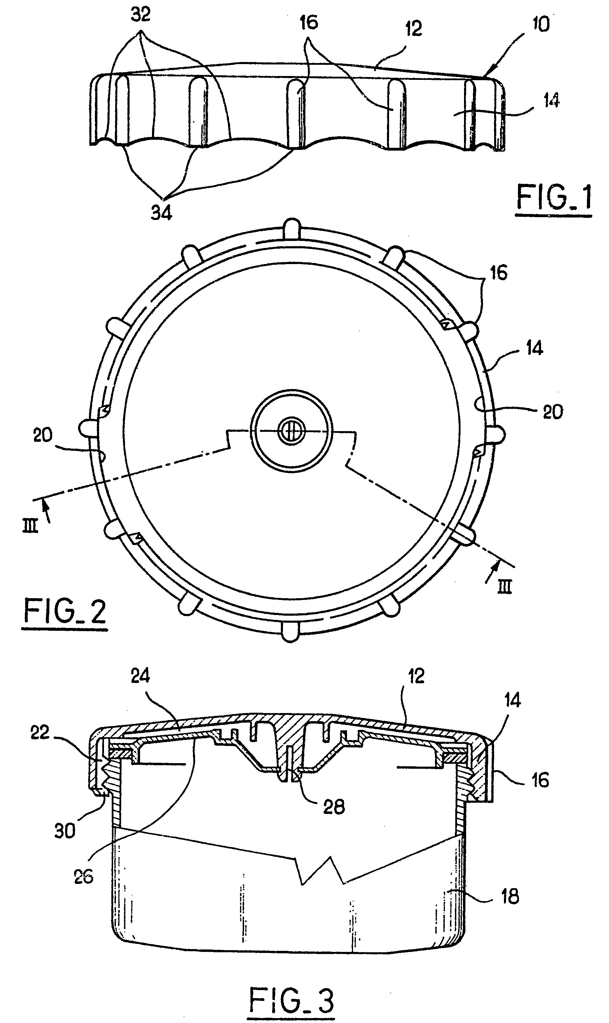

La fig. 1 est une vue en élévation latérale d'un bouchon pour réservoir selon l'invention.

La fig. 2 est une vue en dessous de ce bouchon.

La fig. 3 est une vue en coupe (ligne III-III à la fig. 2) du bouchon monté sur un réservoir.

Le bouchon 10 comporte une partie supérieure 12 et un flanc cylindrique 14 pourvu d'une série de bossages 16 qui facilitent la prise du bouchon en vue de son vissage à l'embouchure du réservoir 18.

Une ou plusieurs dépouilles 20 sont prévues à l'intérieur du flanc du bouchon pour définir un tronçon de passage d'air vertical 22 entre le bouchon et le réservoir. Un second tronçon de passage d'air 24 est défini entre la partie supérieure 12 du bouchon et une plaque déflectrice plaquée de manière étanche à sa périphérie sur l'embouchure du réservoir. Une ouverture centrale 28 communique avec l'intérieur du réservoir et avec le tronçon de passage 24.

Le tronçon de passage 22 se termine à la partie inférieure du flanc 14 par une ouverture 30. Pour éviter l'accumulation de gouttes d'eau et la formation d'un film d'eau dans l'ouverture 30, le flanc 14 se termine par une suite de lignes inclinées par rapport à l'horizontale, constituées dans le présent exemple par des arcs 32 se terminant par des arêtes 34 pointées vers le bas. Ici, les arêtes sont situées dans le prolongement des bossages 16.

Naturellement, au niveau de la dépouille 20, on placera les arêtes 34 au voisinage des extrémités de la dépouille. De la sorte, les gouttes d'eau qui s'écoulent le long des arcs 32 se rassemblent vers les arêtes 34, c'est-à-dire hors de l'ouverture 30.

On conçoit que l'on peut choisir d'autres formes que les arcs 32, notamment des lignes en dents de scie.

## Revendications

1. Réservoir pour liquide de freinage, comportant une embouchure et un bouchon (10) fixé sur ladite embouchure, ledit bouchon (10) comprenant une partie supérieure (12) et un flanc cylindrique (14), un tronçon de passage d'air vertical (22) étant défini entre ledit flanc et ladite embouchure de réservoir et se terminant à sa partie inférieure par une ouverture (30), caractérisé en ce que ledit flanc (14) se termine par une suite de lignes (32) inclinées par rapport à l'horizontale se terminant par des arêtes (34) pointées vers le bas.

2. Réservoir selon la revendication 1, caractérisé en ce que lesdites lignes inclinées sont des arcs dont la courbure est dirigée vers le bas.

3. Réservoir selon l'une des revendications 1 ou 2, caractérisé en ce que lesdites arêtes sont situées hors de ladite ouverture.

## Claims

1. A brake-liquid reservoir, comprising a tank and a cover (10) fixed to said tank, said cover (10) comprising an upper portion (12) and a cylindrical rim portion (14), a vertical air passage (22) being defined between said rim portion and said reservoir tank and terminating at its lower part in an opening (30), characterized in that said rim portion (14) terminates in a series of lines (32) inclined with respect to the horizontal and terminating in downwardly directed edges (34).

2. The reservoir of Claim 1, characterized in that said inclined lines are arcs having a downwardly directed curvature.

3. The reservoir of Claim 1 or 2, characterized in that said edges are situated outside of said opening.

## Patentansprüche

1. Bremsflüssigkeitsbehälter mit einem Behälterteil und einem Deckel (10), der an dem Behälterteil befestigt ist, wobei der Deckel (10) einen oberen Abschnitt (12) und einen zylindrischen Seitenabschnitt (14) aufweist, wobei ein vertikaler Luftkanal (22) zwischen dem Seitenabschnitt und dem Behälterteil gebildet ist und mit seinem unteren Abschnitt in einer Öffnung (30) endet, dadurch gekennzeichnet, dass der Seitenabschnitt (14) in einer Folge von zur Horizontalen geneigten Linien (32) endet, die in nach unten gerichteten Kanten (34) enden.

2. Behälter nach Anspruch 1, dadurch gekennzeichnet, dass die geneigten Linien Bögen sind, deren Krümmung nach unten gerichtet ist.

3. Behälter nach einem der Ansprüche 1 oder 2, dadurch gekennzeichnet, dass die Kanten ausserhalb der besagten Öffnung liegen.

FIG_1

FIG_2

FIG_3